# EUROPÄISCHE PATENTSCHRIFT

(11) **EP 1 348 653 B1**
(45) Veröffentlichungstag und Bekanntmachung des Hinweises auf die Patenterteilung: **14.09.2005**
(21) Anmeldenummer: 02006769.0
(22) Anmeldetag: 25.03.2002
(51) Int. Cl.: B65G 57/03

(54) **Vorrichtung zur Bildung und zur Palettierung von Paketen aus Druckerzeugnissen**
Device for forming stacked printed products and loading them onto a pallet
Dispositif de formation de paquets de produits d'imprimerie empilés et de formation de palettes composées de tels paquets

(43) Veröffentlichungstag der Anmeldung: 01.10.2003
(73) Patentinhaber: Segbert GmbH & Co. KG, 48883 Ahaus (DE)
(72) Erfinder: Segbert, Stephan, 48619 Heek (DE)
(74) Vertreter: Rohmann, Michael

(56) Entgegenhaltungen:
- WO-A-96/25353
- DE-A- 19 508 911
- DE-A- 19 620 967
- US-A- 5 203 671

## Beschreibung

Die Erfindung betrifft eine Vorrichtung zur Bildung und zur Palettierung von Paketen aus Druckerzeugnissen gemäß dem Oberbegriff des Anspruchs 1. Druckerzeugnisse meint im Rahmen der Erfindung insbesondere Zeitschriften, Kataloge, Prospekte u.dgl. Nach dem Drucken werden diese Druckerzeugnisse für den Transport bzw. für den Versand zu Paketen zusammengefasst. In der Regel werden die zu versendenden bzw. zu verschickenden Druckerzeugnisse, die für einen Zielort oder für eine Zielregion bestimmt sind, in einem Paket zusammengefasst. Diese für den Transport bzw. für den Versand bestimmten Pakete werden üblicherweise auf Paletten abgelegt. Zum Ablegen dieser Pakete auf einer Palette dient ein Palettierer.

Bei aus der Praxis bekannten Vorrichtungen haben die aus den Druckerzeugnissen gebildeten Pakete aufgrund des unterschiedlichen Bestimmungsortes bzw. Zielortes häufig auch eine unterschiedliche Dicke bzw. Höhe. Eine Ablage bzw. Stapelung dieser Pakete auf einer Palette ist deshalb problematisch. Ein effektives Palettieren bzw. ein funktionssicheres Ablegen dieser Pakete auf einer Palette ist daher nur mit aufwendigen Zusatzmaßnahmen möglich.

Eine Vorrichtung der eingangs genannten Art ist aus WO-A 96/25353 bekannt. Hier werden Bücher zu Paketen zusammengefasst und die Pakete werden auf Paletten palettiert. Zur Herstellung der Pakete ist eine Stapeleinrichtung vorgesehen, durch die Teilpakete gefördert werden, aus denen die palettierfähigen Pakete in dieser Stapeleinrichtung zusammengefasst werden.

Die Teilpakete können dazu bedarfsweise in eine Zwischenlagerungsebene angehoben werden und anschließend auf einem der nachfolgenden Teilpakete aufgesetzt werden. Zum Anheben der Teilpakete sind Saugnäpfe vorgesehen, die an der Oberseite der Teilpakete angreifen. Diese bekannten Maßnahmen haben sich nicht bewährt.

Demgegenüber liegt der Erfindung das technische Problem zugrunde, eine Vorrichtung der eingangs genannten Art anzugeben, mit der fertige Pakete mit gezielt einstellbarer Dicke erzeugt werden können, die auf einfache, systematische und effektive Weise auf einer Palette abgelegt werden können.

Zur Lösung dieses technischen Problems lehrt die Erfindung eine Vorrichtung zur Bildung und zur Palettierung von Paketen aus Druckerzeugnissen, die in verbindung mit dem Oberbegriff des Anspruchs 1 dadurch ist gekennzeichnet, daß in jeder Stapelvorrichtung zumindest ein Ergänzungs-Teilpaket von einer zweiten Liftvorrichtung aus der Transportebene in eine zweite Zwischenlagerungsebene anhebbar ist, welche vertikal oberhalb der Transportebene und vertikal oberhalb der ersten Zwischenlagerungsebene angeordnet ist.

Teilpakete meint die Stapel von Druckerzeugnissen, die den Kreuzleger verlassen. Zweckmäßigerweise umfasst ein Teilpaket die Druckerzeugnisse, die für einen bestimmten Zielort bestimmt sind. Das Teilpaket ist also einem definierten Bestimmungsort zugeordnet. Normalerweise umfassen die Teilpakete aus diesem Grunde jeweils eine unterschiedliche Anzahl von Druckerzeugnissen und dementsprechend weisen die verschiedenen Teilpakete in der Regel eine unterschiedliche Dicke bzw. Höhe auf. Pakete bzw. fertige Pakete meint im Rahmen der Erfindung die Stapel von Druckerzeugnissen, die palettierfertig sind bzw. auf der Palette abgelegt werden können. Erfindungsgemäß werden die Pakete bzw. fertigen Pakete in der Sammelstation aus jeweils zwei oder mehr Teilpaketen gebildet. Grundsätzlich kann ein den Kreuzleger verlassendes Teilpaket aber auch bereits eine für das Palettieren ausreichende Dicke bzw. Höhe aufweisen. In diesem Ausnahmefall entspricht dann erfindungsgemäß ein Teilpaket einem fertigen Paket.

Es liegt im Rahmen der Erfindung, dass die Teilpakete aus den Druckerzeugnissen automatisch gebildet werden. Automatische Bildung von Teilpaketen meint, dass fortlaufend zugeführte Druckerzeugnisse vollautomatisch und ohne manuelle Hilfe oder zumindest weitgehend ohne manuelle Hilfe zu den Teilpaketen zusammengefasst werden. Fortlaufende Zuführung von Druckerzeugnissen meint im Rahmen der Erfindung, dass die Druckerzeugnisse kontinuierlich oder taktweise zugeführt werden. Für denselben Zielort bestimmte Druckerzeugnisse bzw. Teilpakete meint im Rahmen der Erfindung auch für dieselbe Zielregion bestimmte Druckerzeugnisse bzw. Teilpakete. Wie oben bereits ausgeführt, werden nach sehr bevorzugter Ausführungsform der Erfindung jeweils eine bestimmte Anzahl von Druckerzeugnissen, die allesamt für denselben Zielort bestimmt sind, in einem Teilpaket zusammengefasst. Zweckmäßigerweise ist vor dem Kreuzleger eine Adressiervorrichtung für die Druckerzeugnisse bzw. Teilpakete vorgesehen. Die Adressiervorrichtung bzw. eine mit der Adressiervorrichtung verbundene Steuer- und/oder Regeleinrichtung liefert vorzugsweise dem Kreuzleger Signale für das Bilden und Ausstoßen der Teilpakete. In dem Kreuzleger werden mit einer entsprechenden Zähleinrichtung die Druckerzeugnisse, die in einem Teilpaket zusammengefasst werden, gezählt. Diese Information kann vorzugsweise einer Steuer- und/oder Regeleinrichtung zugeführt werden, die mit der Sammelstation verbunden ist.

Die Teilpakete werden vom Kreuzleger zweckmäßigerweise über ein Förderband bzw. über Förderbänder zu der Sammelstation transportiert. Auch durch die Sammelstation werden die Teilpakete bevorzugt mit Hilfe von Förderbändern weitertransportiert. Ein in eine Stapelvorrichtung einfahrendes Teilpaket fährt zweckmäßigerweise gegen einen Paketanschlag, der bevorzugt als zumindest eine Anschlagstange ausgebildet ist. Die zumindest eine Anschlagstange kann bei Bedarf entsprechend ausgefahren werden. Vorzugsweise ist der Paketanschlag in Form von zwei parallelen Anschlagstangen ausgebildet. Erfindungsgemäß wird in einer Stapelvorrichtung der Sammelstation zumindest ein Teilpaket von einer ersten Liftvorrichtung aus einer Transportebene in eine erste Zwischenlagerungsebene angehoben. Durch Anheben auf diese Zwischenlagerungsebene wird das betreffende Teilpaket also in der Stapelvorrichtung zwischengelagert. Transportebene meint die Förderebene, auf der die Pakete bzw. Teilpakete durch die Stapelvorrichtung bzw. durch die Sammelstation in Richtung Palettierer befördert werden. Die Transportebene wird in der Sammelstation zweckmäßigerweise durch ein Förderband oder durch eine Mehrzahl von Förderbändern gebildet. Vorzugsweise ist jeder Stapeleinrichtung ein Förderband zugeordnet. Zweckmäßigerweise ist weiterhin jedem Förderband einer Stapelvorrichtung ein Paketanschlag zugeordnet. Mit diesem Paketanschlag wird ein Teilpaket, das in der jeweiligen Stapelvorrichtung zwischengelagert werden soll, gestoppt.

Mit der ersten Liftvorrichtung können auch zwei oder mehr Teilpakete in die erste Zwischenlagerungsebene angehoben werden. Wenn beispielsweise bereits ein Teilpaket in der ersten Zwischenlagerungsebene einer Stapelvorrichtung zwischengelagert ist, so kann dieses zwischengelagerte Teilpaket auf ein zweites in die Stapelvorrichtung eingeführtes und zweckmäßigerweise am Paketanschlag anliegendes Teilpaket abgelegt werden und sodann kann das gesamte Aggregat aus den beiden Teilpaketen in die erste Zwischenlagerungsebene angehoben werden. Ebenso kann auch mit drei oder mehr Teilpaketen verfahren werden.

Die erste Liftvorrichtung besteht vorzugsweise aus horizontalen Stangen, die ein in der Transportebene befindliches Teilpaket unterfassen können und dann in die erste Zwischenlagerungsebene anheben können. Zweckmäßigerweise können von zwei gegenüberliegenden Seiten eines Teilpaketes eine Mehrzahl von horizontalen Stangen unter das Teilpaket gefahren werden, so dass die von beiden Seiten ausgefahrenen Stangen das Teilpaket unterfassen. Danach werden die Stangen dann vertikal nach oben bewegt, so dass das Teilpaket in die erste Zwischenlagerungsebene gelangt. Nach der vorstehend erläuterten Ausführungsform wird die erste Zwischenlagerungsebene somit von horizontal angeordneten Stangen gebildet.

Erfindungsgemäß befindet sich die erste Zwischenlagerungsebene vertikal oberhalb der Transportebene einer Stapelvorrichtung. Vorzugsweise ist die erste Zwischenlagerungsebene zumindest 20 cm, bevorzugt zumindest 30 cm vertikal oberhalb der Transportebene einer Stapelvorrichtung angeordnet. Es liegt im Rahmen der Erfindung, dass die erste Zwischenlagerungsebene einer Stapelvorrichtung mit der Maßgabe angeordnet ist, dass weitere Teilpakete unterhalb der ersten Zwischenlagerungsebene über die Transportebene durch die Stapelvorrichtung beförderbar sind. Grundsätzlich liegt es auch im Rahmen der Erfindung, dass das Teilpaket bzw. dass die Teilpakete mit der ersten Liftvorrichtung in mehrere unterschiedliche Zwischenlagerungsebenen angehoben werden können.

Erfindungsgemäß ist jede Stapelvorrichtung der Sammelstation mit einer ersten Liftvorrichtung ausgerüstet, mit der zumindest ein Teilpaket in eine erste Zwischenlagerungsebene anhebbar ist. Das betreffende Teilpaket bzw. die betreffenden Teilpakete warten dann in der ersten Zwischenlagerungsebene auf ein weiteres Teilpaket, das in die jeweilige Stapelvorrichtung eingefahren wird und dort auch, vorzugsweise am Paketanschlag, angehalten wird. Dann wird das Teilpaket oder die Teilpakete, die sich in der ersten Zwischenlagerungsebene befinden, auf dem weiteren Teilpaket abgelegt. Das resultierende Aggregat aus Teilpaketen kann dann entweder wieder in die erste Zwischenlagerungsebene angehoben werden oder aber weiter in die nächste Stapelvorrichtung fahren oder zum Palettierer fahren. Wenn das Aggregat aus Teilpaketen in eine weitere Stapelvorrichtung fährt und dort, vorzugsweise an einem Paketanschlag, angehalten wird, ist eine weitere Ablage von in der ersten Zwischenlagerungsebene dieser weiteren Stapelvorrichtung befindlichen Teilpaketen auf dem Aggregat möglich. Auf diese Weise können erfindungsgemäß sehr variabel Pakete mit verschiedenen Höhen bzw. Dicken erzeugt werden. Natürlich muss ein in eine Stapelvorrichtung einlaufendes Teilpaket nicht unbedingt in die Zwischenlagerungsebene dieser Stapelvorrichtung angehoben werden. Vielmehr kann dieses Teilpaket nach Bedarf auch in die nächste Stapelvorrichtung oder in die übernächste Stapelvorrichtung gefahren werden und beispielsweise erst dort in die erste Zwischenlagerungsebene angehoben werden. Wenn das Teilpaket sich bereits für das Palettieren eignet und somit als fertiges Paket eingesetzt wird, kann das vom Kreuzleger kommende Teilpaket auch alle Stapelvorrichtungen durchfahren, ohne dass es in eine erste Zwischenlagerungsebene angehoben wird und kann dann unmittelbar dem Palettierer zugeführt werden.

Erfindungsgemäß wird in jeder Stapeleinrichtung der Sammelstation zumindest ein Ergänzungs-Teilpaket von einer zweiten Liftvorrichtung aus der Transportebene in eine zweite Zwischenlagerungsebene angehoben. Ergänzungs-Teilpaket meint ebenfalls ein vom Kreuzleger zur Verfügung gestelltes Teilpaket aus Druckerzeugnissen, das jedoch vorzugsweise eine geringere Dicke bzw. eine geringere vertikale Höhe hat als die übrigen Teilpakete. Zweckmäßigerweise handelt es sich bei den Ergänzungs-Teilpaketen um Teilpakete, deren Dicke lediglich die Hälfte oder ein Drittel der durchschnittlichen Dicke bzw. der durchschnittlichen vertikalen Höhe der übrigen Teilpakete beträgt. Erfindungsgemäß wurde gefunden, dass durch Zwischenlagerung der Ergänzungs-Teilpakete ein sehr flexibles und variables Zusammenstellen von fertigen Paketen möglich ist. Bei Bedarf kann ein Ergänzungs-Teilpaket aus der zweiten Zwischenlagerungsebene auf einem in der Transportebene befindlichen Teilpaket oder auf einem dort befindlichen Aggregat aus mehreren Teilpaketen abgelegt werden. Grundsätzlich ist es im Rahmen der Erfindung auch möglich, dass ein Ergänzungs-Teilpaket auf einem Teilpaket oder auf mehreren Teilpaketen abgelegt werden kann, die sich in der ersten Zwischenlagerungsebene befinden. Die zweite Liftvorrichtung besteht vorzugsweise wie die erste Liftvorrichtung aus mehreren horizontalen Stangen. Es liegt somit im Rahmen der Erfindung, dass diese horizontalen Stangen unter ein in der Transportebene befindliches Ergänzungs-Teilpaket fahren können und dieses Ergänzungs-Teilpaket dann in die zweite Zwischenlagerungsebene anheben. Im Rahmen der Erfindung können von zwei gegenüberliegenden Seiten jeweils mehrere horizontale Stangen unter ein Ergänzungs-Teilpaket gefahren werden und diese horizontalen Stangen fahren dann mit dem Ergänzungs-Teilpaket vertikal nach oben und bilden in der angehobenen Position die zweite Zwischenlagerungsebene. Erfindungsgemäß ist die zweite Zwischenlagerungsebene vertikal oberhalb der Transportebene und vertikal oberhalb der ersten Zwischenlagerungsebene angeordnet.

Nach sehr bevorzugter Ausführungsform, der im Rahmen der Erfindung ganz besondere Bedeutung zukommt, werden die vom Kreuzleger kommenden Teilpakete durch drei Stapelvorrichtungen geführt. Bei dieser Ausführungsform bilden die drei Stapelvorrichtungen also die Sammelstation. Erfindungsgemäß ist jede der drei Stapelvorrichtungen mit einer ersten Liftvorrichtung und mit einer zweiten Liftvorrichtung ausgestattet. Zweckmäßigerweise weist jede der drei Stapelvorrichtungen an der Transportebene einen Paketanschlag für ein einfahrendes Teilpaket auf.

Vorzugsweise weist die erfindungsgemäße Vorrichtung eine Steuer- und/oder Regeleinrichtung auf, der Informationen über die in der Sammelstation gebildeten Teilpakete zugeführt werden und in der Steuer- und/oder Regeleinrichtung wird anhand der zugeführten Informationen ein Lagenbild für den Palettierer berechnet. Bei den Informationen handelt es sich zweckmäßigerweise um Daten der Dicke bzw. Höhe der Teilpakete bzw. Pakete. Die Steuer- und/oder Regeleinrichtung weist zumindest einen Mikroprozessor auf, mit dessen Hilfe das Lagenbild für den Palettierer berechnet wird. Berechnung des Lagenbildes meint die Berechnung einer geeigneten Anordnung der Pakete auf einer Palette. Diese Anordnung wird weiter unten näher erläutert.

Nach sehr bevorzugter Ausführungsform der Erfindung werden der Sammelstation von der Steuer- und/oder Regeleinrichtung Auftragsbefehle für die Bildung der Teilpakete zugeführt. Mit anderen Worten wird mit Hilfe der Steuer- und/oder Regeleinrichtung festgestellt, welche Pakete noch für ein geeignetes Lagenbild auf der Palette fehlen und dementsprechend erhält die Sammelstation Auftragsbefehle für die Bildung von benötigten fertigen Paketen aus den Teilpaketen bzw. Ergänzungs-Teilpaketen.

Im Rahmen der Erfindung können auf einer Palette höhere Pakete an den Palettenecken und niedrigere Pakete in der Palettenmitte abgelegt werden. Pakete meint hier die fertigen für die Palettierung zusammengestellten Pakete. Die Ablage der fertigen Pakete auf der Palette erfolgt mit dem Palettierer der erfindungsgemäßen Vorrichtung. Auf der Palette wird gleichsam ein trichterförmiges Lagenbild aus Paketen gebildet. Dabei werden die hohen Pakete an den Palettenecken und an den Palettenseiten abgelegt und die niedrigen Pakete in der Palettenmitte, wobei vorzugsweise die Höhe der Pakete zur Palettenmitte hin abnimmt. Dieses Lagenbild hat sich für die Manipulation bzw. für die Lagerung und den Transport der Paletten besonders bewährt. Mit diesem Lagenbild ist eine funktionssichere Manipulation von Paletten möglich, ohne dass Pakete bzw. Teilpakete in unerwünschter Weise verrutschen bzw. von der Palette rutschen.

Nach bevorzugter Ausführungsform der erfindungsgemäßen Vorrichtung ist zwischen Sammelstation und Palettierer eine Schleusvorrichtung für die fertigen Pakete vorgesehen, mit welcher Schleusvorrichtung zumindest ein fertiges Paket vorübergehend aus der Förderstraße ausschleusbar ist und bei Bedarf wieder einschleusbar ist. Förderstraße meint die Fördervorrichtung für die Pakete, die zwischen der Sammelstation und dem Palettierer angeordnet ist. Zweckmäßigerweise besteht die Förderstraße aus Förderbändern. Die Schleusvorrichtung wird vorzugsweise von einem Drehtisch gebildet, an den zumindest an einer Seite der Förderstraße eine Ablageeinrichtung für zumindest ein fertiges Paket anschließt.

Der Erfindung liegt die Erkenntnis zugrunde, dass mit der erfindungsgemäßen Vorrichtung eine sehr flexible und variable Bildung von palettierbaren Paketen von Druckerzeugnissen möglich ist. Es können Pakete mit unterschiedlichsten Höhe bzw. Dicken gebildet werden, so dass auf einer Palette ein optimales Lagenbild erzeugt werden kann. Mit einer erfindungsgemaßen Vorrichtung mit einer Sammelstation, die vorzugsweise von drei Stapelvorrichtungen gebildet wird, ist ein funktionssicheres und optimales Aufeinanderstapeln von Teilpaketen bzw. Ergänzungs-Teilpaketen möglich. Innerhalb der Sammelstation können die Teilpakete in Förderrichtung gleichsam sehr variabel gemischt bzw. übereinandergestapelt werden. Zu dem erfindungsgemäßen Erfolg trägt auch insbesondere das Merkmal bei, wonach in jeder Stapeleinrichtung zumindest ein Ergänzungs-Teilpaket von einer zweiten Liftvorrichtung in eine zweite Zwischenlagerungsebene angehoben wird. In dieser zweiten Zwischenlagerungsebene kann stets ein Ergänzungs-Teilpaket geringerer Dicke bereitgehalten werden, um bei Bedarf mit einem weiteren Teilpaket bzw. mit Teilpaketen zu einem Paket mit gewünschter Höhe kombiniert zu werden. Mit der erfindungsgemäßen Vorrichtung ist es mehr oder weniger egal, welche Art von Teilpaket von dem Kreuzleger zur Verfügung gestellt wird. Durch die Mischfunktion der Sammelstation können aus Teilpaketen verschiedenster Höhe fertige Pakete mit der gewünschten Höhe gebildet und der Palette zugeführt werden. Wesentlich ist, dass mit der erfindungsgemäßen Vorrichtung eine kontinuierliche oder zumindest taktweise zügige Arbeitsweise möglich ist. Zu betonen ist weiterhin, dass die erfindungsgemäße Vorrichtung relativ einfach und wenig aufwendig aufgebaut ist und somit auch kostengünstig herstellbar ist. Bereits existierende Vorrichtungen können auf einfache Weise mit den erfindungsgemäßen Komponenten nachgerüstet werden.

Nachfolgend wird die Erfindung anhand einer lediglich ein Ausführungsbeispiel darstellenden Zeichnung näher erläutert. Es zeigen in schematischer Darstellung:
- Fig. 1: ein Schema einer erfindungsgemäßen Vorrichtung in der Draufsicht und
- Fig. 2: eine Seitenansicht der Sammelstation der Vorrichtung.

Die Figuren zeigen eine Vorrichtung zur Bildung und zur Palettierung von Paketen 1 aus Druckerzeugnissen. In einem Kreuzleger 2 werden Teilpakete 3 gebildet und aus dem Kreuzleger 2 ausgestoßen. Die von dem Kreuzleger 2 kommenden Teilpakete 3 werden einer Sammelstation 4 zugeführt, die vorzugsweise und im Ausführungsbeispiel aus drei Stapelvorrichtungen 5, 6, 7 besteht. In der Sammelstation 4 werden aus den Teilpaketen 3 fertige palettierbare Pakete 1 gebildet, die dem Palettierer 8 zugeführt werden. Mit dem Palettierer 8 werden die fertigen Pakete 1 nach einem vorgegebenem Muster bzw. nach einem vorgegebenen Lagenbild auf einer Palette 9 abgelegt.

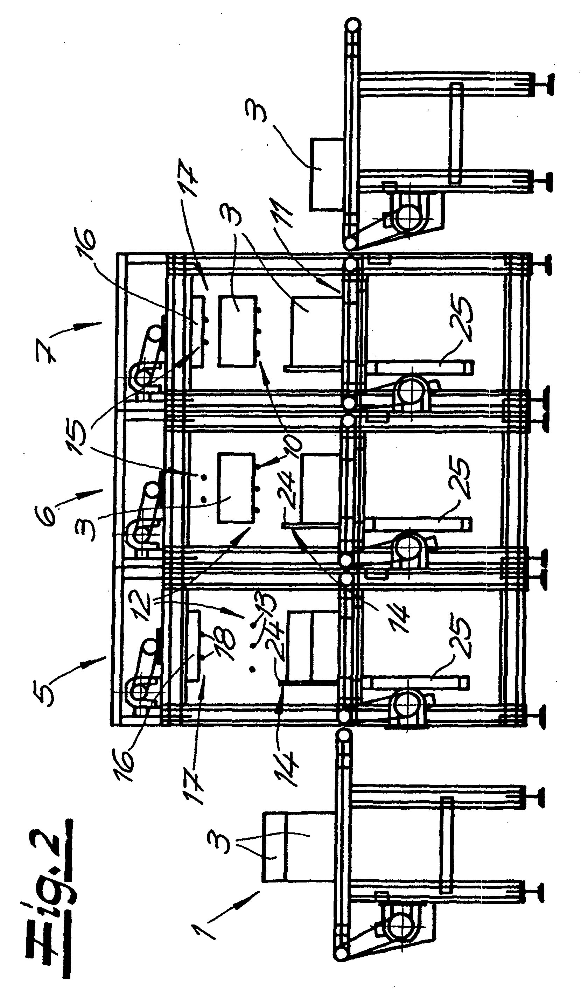

In einem Teilpaket 3 sind im Ausführungsbeispiel Druckerzeugnisse zusammengefasst, die allesamt für denselben Zielort, beispielsweise für dieselbe Stadt bestimmt sind. In jeder der drei Stapelvorrichtungen 5, 6, 7 ist eine erste Liftvorrichtung 10 vorgesehen, mit der zumindest ein Teilpaket 3 aus einer Transportebene 11 in eine erste Zwischenlagerungsebene 12 angehoben wird. Im Ausführungsbeispiel nach Fig. 2 besteht die erste Liftvorrichtung 10 aus sechs horizontalen Stangen 13, von denen jeweils drei Stangen 13 von jeder Seite unter ein Teilpaket 3 fahrbar sind. In Fig. 2 sind von jeder ersten Liftvorrichtung 10 jeweils nur drei Stangen 13 dargestellt. Die sechs Stangen 13 untergreifen also ein in der Transportebene 11 angeordnetes und zweckmäßigerweise vor einem Paketanschlag 14 angehaltenes Teilpaket 3 und heben dieses Teilpaket 3 dann vertikal nach oben in die erste Zwischenlagerungsebene 12. Dort verbleibt das Teilpaket 3 bis es bei Bedarf auf einem weiteren vor dem Paketanschlag 14 der betreffenden Stapelvorrichtung 5, 6, 7 angehaltenen Teilpaket 3 abgelegt wird. Hierzu fahren die horizontalen Stangen 13 der ersten Liftvorrichtung 10 dann wieder vertikal nach unten bis sie auf dem weiteren Teilpaket 3 aufliegen und dann fahren die sechs Stangen zur Seite, so dass das obere Teilpaket 3 auf dem unteren Teilpaket 3 zur Auflage kommt. Dann kann das Aggregat aus den beiden Teilpaketen 3 auf der Transportebene 11 weiterbefördert werden und beispielsweise in eine weitere Stapelvorrichtung 5, 6, 7 eingeführt werden. Es liegt aber auch im Rahmen der Erfindung, dass das Aggregat der beiden Teilpakete 3 dann von den Stangen 13 der ersten Liftvorrichtung 10 wieder aufgenommen wird und in der ersten Zwischenlagerungsebene 12 auf Vorrat gehalten wird, bis ein geeignetes weiteres Teilpaket 3 in die jeweilige Stapelvorrichtung 5, 6, 7 einfährt, auf dem dann das Aggregat aus Teilpaketen 3 aus der ersten Zwischenlagerungsebene 12 abgelegt werden kann.

In Fig. 2 ist erkennbar, dass in jeder der Stapelvorrichtungen 5, 6, 7 eine zweite Liftvorrichtung 15 vorgesehen ist, mit der jeweils zumindest ein Ergänzungs-Teilpaket 16 aus der Transportebene 11 in eine zweite Zwischenlagerungsebene 17 angehoben wird. Das Ergänzungs-Teilpaket 16 hat vorzugsweise und im Ausführungsbeispiel eine geringere Dicke bzw. eine geringere vertikale Höhe als die übrigen Teilpakete 3. Ein solches Ergänzungs-Teilpaket 16 kann als Ergänzung eines Teilpaketes 3 bzw. eines Aggregates aus mehreren Teilpaketen 3 zu einem fertigen Paket 1 verwendet werden. Eine solche Situation ist in der Stapelvorrichtung 7 dargestellt. Das in der zweiten Zwischenlagerungsebene 17 befindliche Ergänzungs-Teilpaket 16 kann durch Abwärtsbewegung der horizontalen Stangen 18 und entsprechendes seitliches Ausfahren der horizontalen Stangen 18 auf dem vor dem Paketanschlag 14 der Stapelvorrichtung 7 angeordneten Aggregat aus Teilpaketen 3 abgelegt werden und somit zu einem fertigen Paket 1 ergänzt werden. Die zweite Liftvorrichtung 15 besteht im Ausführungsbeispiel aus insgesamt vier horizontalen Stangen 18, von denen jeweils zwei von jeder Seite unter ein Ergänzungs-Teilpaket 16 einfahrbar sind und mit denen dann das Ergänzungs-Teilpaket in die zweite Zwischenlagerungsebene 17 angehoben werden kann. In der Fig. 2 sind jeweils nur zwei horizontale Stangen 18 der zweiten Liftvorrichtungen 15 dargestellt. Es versteht sich im Übrigen, dass die vertikale Aufwärtsbewegung und die vertikale Abwärtsbewegung der ersten Liftvorrichtung 10 und der zweiten Liftvorrichtung 15 so eingerichtet wird, dass sich beide Liftvorrichtungen bei ihrer vertikalen Verschiebung nicht behindern. Hierzu kennt der Fachmann eine Mehrzahl von konstruktiven Möglichkeiten.

In Fig. 2 ist erkennbar, dass in der ersten Zwischenlagerungsebene 12 jeder Stapelvorrichtung 5, 6, 7 zumindest jeweils ein Teilpaket 3 zwischenlagerbar ist und dass in der zweiten Zwischenlagerungsebene 17 jeder Stapelvorrichtung 5, 6, 7 zumindest ein Ergänzungs-Teilpaket 16 zwischenlagerbar ist und dass ein Teilpaket 3 bzw. ein Ergänzungs-Teilpaket 16 bei Bedarf vertikal nach unten bewegt werden kann und auf einem weiteren Teilpaket 3 bzw. auf einem Aggregat aus Teilpaketen 3 abgelegt werden kann. Auf diese Weise ist ein sehr variables und flexibles Mischen von Teilpaketen 3 bzw. Ergänzungs-Teilpaketen 16 möglich, so dass auf sehr effektive und einfache Weise fertige Pakete 1 gebildet werden können. Von besonderer Bedeutung ist, dass die Bildung der fertigen Pakete 1 kontinuierlich oder zumindest taktweise erfolgen kann.

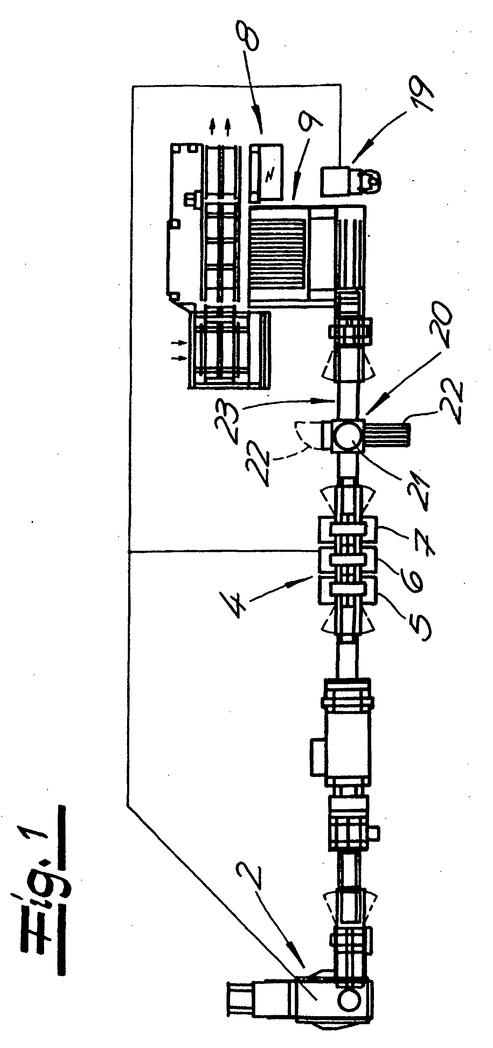

In der Fig. 1 ist im Übrigen ein Computer 19 erkennbar, der Bestandteil einer Steuer- und/oder Regeleinrichtung ist. Nach bevorzugter Ausführungsform der Erfindung können dieser Steuer- und/oder Regeleinrichtung Informationen über die in der Sammelstation 4 gebildeten Teilpakete 3 zugeführt werden. In der Steuer- und Regeleinrichtung kann dann anhand der zugeführten Informationen zweckmäßigerweise mit Hilfe des Computers 19 ein Lagenbild für den Palettierer 8 berechnet werden. Im Übrigen können der Sammelstation 4 von der Steuer- und/oder Regeleinrichtung Auftragsbefehle für die Bildung fertiger Pakete 1 bestimmter Höhe aus den Teilpaketen 3 bzw. Ergänzungs-Teilpaketen 16 zugeführt werden.

In der Fig. 1 ist weiterhin erkennbar, dass zwischen der Sammelstation 4 und dem Palettierer 8 eine Schleusvorrichtung 20 angeordnet ist, die im Ausführungsbeispiel einen Drehtisch 21 aufweist. Im Ausführungsbeispiel nach Fig. 1 sind an jeder Seite des Drehtisches 21 Ablageeinrichtungen 22 vorgesehen. Auf jede der Ablageeinrichtungen 22 kann zeitweise zumindest ein fertiges Paket 1 ausgeschleust werden und bei Bedarf wieder in die Förderstraße 23 zwischen Sammelstation 4 und Palettierer 8 eingeschleust werden, so dass das Paket 1 dann zum Palettierer 8 befördert wird. Zweckmäßigerweise werden mit der Schleusvorrichtung 20 besonders hohe fertige Pakete 1 zeitweise ausgeschleust, die bei Bedarf wieder eingeschleust und dann an den Ecken der Palette 9 angeordnet werden, so dass sich das trichterförmige Lagenbild von Paketen 1 auf der Palette 9 ergibt. In diesem nicht näher dargestellten trichterförmigen Lagenbild sind sehr hohe Pakete 1 an den Ecken der Palette angeordnet und hohe bzw. höhere Pakete 1 an den Seiten der Palette 9 angeordnet. Die Höhe der Pakete 1 nimmt zur Mitte der Palette 9 hin ab, so dass sich eine trichterförmige Oberfläche ergibt.

Der in Fig. 2 dargestellte Paketanschlag 14 besteht im Ausführungsbeispiel aus zumindest einer Anschlagstange 24, die in einen zugeordneten Zylinder 25 einfahrbar bzw. aus diesem Zylinder 25 bei Bedarf ausfahrbar ist.

## Patentansprüche

1. Vorrichtung zur Bildung und zur Palettierung von Paketen (1) aus Druckerzeugnissen,
wobei ein Kreuzleger (2) vorgesehen ist und wobei Teilpakete (3) und Ergänzungs-Teilpakete (16) von dem Kreuzleger (2) einer Sammelstation (4) mit zumindest zwei hintereinander angeordneten Stapelvorrichtungen (5, 6, 7) zur Sortierung der Teilpakete (3) und Ergänzungs-Teilpakete (16) zuführbar sind,
wobei in jeder Stapelvorrichtung (5, 6, 7) zumindest ein Teilpaket (3) und/oder zumindest ein Ergänzungs-Teilpaket (16) zwischenlagerbar ist und wobei ein zwischengelagertes Teilpaket (3) und/oder Ergänzungs-Teilpaket (16) bei Bedarf auf einem zweiten in diese Stapelvorrichtung (5, 6, 7) eingelaufenen Teilpaket (3) ablegbar ist,
wobei in jeder Stapelvorrichtung (5, 6, 7) der Sammelstation (4) zumindest ein Teilpaket (3) von einer ersten Liftvorrichtung (10) aus einer Transportebene (11) in eine erste Zwischenlagerungsebene (12) anhebbar ist, welche sich vertikal oberhalb der Transportebene (11) befindet, und wobei ein Palettierer (8) vorgesehen ist, in dem die in der Sammelstation (4) aus den Teilpaketen (3) bzw. den Ergänzungs-Teilpaketen (16) gebildeten fertigen Pakete (1) auf einer Palette (9) nach einem vorgegebenen Muster ablegbar sind, **dadurch gekennzeichnet, daß**
in jeder Stapelvorrichtung (5, 6, 7) zumindest ein Ergänzungs-Teilpaket (16) von einer zweiten Liftvorrichtung (15) aus der Transportebene (11) in eine zweite Zwischenlagerungsebene (17) anhebbar ist, welche vertikal oberhalb der Transportebene (11) und vertikal oberhalb der ersten Zwischenlagerungsebene (12) angeordnet ist.

2. Vorrichtung nach Anspruch 1, wobei die Sammelstation (4) drei Stapelvorrichtungen (5, 6, 7) aufweist.

3. Vorrichtung nach einem der Ansprüche 1 oder 2, wobei die erste Liftvorrichtung (10) aus horizontalen Stangen besteht, mit denen ein in der Transportebene (11) befindliches Teilpaket (3) unterfassbar ist und in die erste Zwischenlagerungsebene (12) anhebbar ist.

4. Vorrichtung nach einem der Ansprüche 1 bis 3, wobei die zweite Liftvorrichtung (15) aus horizontalen Stangen besteht, mit denen ein in der Transportebene (11) befindliches Ergänzungs-Teilpaket (16) unterfassbar ist und in die zweite Zwischenlagerungsebene (12) anhebbar ist.

5. Vorrichtung nach einem der Ansprüche 1 bis 4, wobei eine Steuer- und/oder Regeleinrichtung vorgesehen ist, der Informationen über die in der Sammelstation (4) gebildeten Teilpakete (3) zuführbar sind und in der anhand der zugeführten Informationen ein Lagenbild für den Palettierer (8) berechenbar ist.

6. Vorrichtung nach Anspruch 5, wobei der Sammelstation (4) von der Steuer- und/oder Regeleinrichtung Auftragsbefehle für die Bildung der Teilpakete (3) zuführbar sind.

7. Vorrichtung nach einem der Ansprüche 1 bis 6, wobei zwischen Sammelstation (4) und Palettierer (8) eine Schleusvorrichtung (20) für die fertigen Pakete (1) vorgesehen ist, mit welcher Schleusvorrichtung (20) zumindest ein fertiges Paket (1) vorübergehend aus der Förderstraße (23) zwischen Sammelstation (4) and Pallettieren (8) ausschleusbar ist und bei Bedarf wieder einschleusbar ist.

## Claims

1. Device for the production and palletising of packs (1) of printed products,
whereby a stacker (2) is provided and whereby partial packs (3) and supplementary partial packs (16) can be fed from the stacker (2) to a collector station (4) with at least two stacking devices (5, 6, 7) arranged one behind the another for the sorting of the partial packs (3) and supplementary partial packs (16),
in which in each stacking device (5, 6, 7) at least one partial pack (3) and/or at least one supplementary partial pack (16) can be intermediately stored and in which an intermediately stored partial pack (3) and/or supplementary partial pack (16) can be deposited, if required, on a second partial pack (3) that has been inserted in this stacking device (5, 6, 7),
whereby in each stacking device (5, 6, 7) at the collector station (4) at least one partial pack (3) can be lifted by a first lifting device (10) from a transport level (11) to a first intermediate storage level (12), which is located vertically above the transport level (11),
and whereby a palletising device (8) is provided, in which the finished packs (1) produced at the collector station (4) from the partial packs (3) and the supplementary partial packs (16) can be deposited on a pallet (9) in accordance with a prescribed pattern,
**characterised in that** in each stacking device (5, 6, 7) at least one supplementary partial pack (16) can be lifted by a second lifting device (15) from the transport level (11) to a second intermediate storage level (17), which is arranged vertically above the transport level (11) and vertically above the first intermediate storage level (12).

2. Device in accordance with Claim 1, whereby the collector station (4) has three stacking devices (5, 6, 7).

3. Device in accordance with either of the Claims 1 or 2, in which the first lifting device (10) consists of horizontal rods, with which a partial pack (3) on the transport level (11) can be constrained and lifted to the first intermediate storage level (12).

4. Device in accordance with any of the Claims 1 to 3, in which the second lifting device (15) consists of horizontal rods, with which a supplementary partial pack (16) on the transport level (11) can be constrained and lifted to the second intermediate storage level (12).

5. Device in accordance with any of the Claims 1 to 4, in which a control and/or regulating device is provided, to which information relating to the partial packs (3) produced at the collector station (4) can be transferred and in which the transferred information can be used to calculate an image of the build-up of packs for the palletising device (8).

6. Device in accordance with Claim 5, whereby the control and/or regulating device is able to transfer job control commands for the production of the partial packs (3) to the collector station (4).

7. Device in accordance with any of the Claims 1 to 6, in which a lock device (20) for the finished packs (1) is provided between the collector station (4) and the palletising device (8), with which lock device (20) at least one finished pack (1) can be transiently removed from the conveying path (23) between the collector station (4) and the palletising device (8) and returned to the conveying path, as required.

## Revendications

1. Dispositif de formation et de palettisation de paquets (1) de produits d'imprimerie,
dans lequel il est prévu un alimentateur perpendiculaire (2) et dans lequel des paquets partiels (3) et des paquets partiels de complément (16) provenant de l'alimentateur perpendiculaire (2) sont transportés à un poste de rassemblement (4) comprenant au moins deux dispositifs d'empilage (5, 6, 7) disposés successivement permettant de trier les paquets partiels (3) et les paquets partiels de complément (16),
dans lequel, dans chaque dispositif d'empilage (5, 6, 7) au moins un paquet partiel (3) et/ou au moins un paquet partiel de complément (16) peut être stocké de manière intermédiaire et dans lequel un paquet partiel (3) et/ou un paquet partiel de complément (16) stocké de manière intermédiaire peut être déposé, selon le besoin, sur un deuxième paquet partiel (3) arrivant dans ce dispositif d'empilage (5, 6, 7),
dans lequel, dans chaque dispositif d'empilage (5, 6, 7) du poste de rassemblement (4) au moins un paquet partiel (3) peut être soulevé, au moyen d'un premier dispositif de levage (10), d'un premier niveau de transport (11) vers un premier niveau de stockage intermédiaire (12) qui se trouve verticalement au-dessus du niveau de transport (11),
dans lequel il est prévu un palettiseur (8) dans lequel les paquets finis (1) formés dans le poste de rassemblement (4) à partir des paquets partiels (3) ou des paquets partiels de complément (16) peuvent être déposés sur une palette (9) suivant un schéma prédéterminé,
**caractérisé en ce que**, dans chaque dispositif d'empilage (5, 6, 7), au moins un paquet partiel de complément (16) peut être soulevé, au moyen d'un second dispositif de levage (15), du niveau de transport (11) vers un second niveau de stockage intermédiaire (17) qui se trouve verticalement au-dessus du niveau de transport (11) et verticalement au-dessus du premier niveau de stockage intermédiaire (12).

2. Dispositif selon la revendication 1, dans lequel le poste de rassemblement (4) présente trois dispositifs d'empilage (5, 6, 7).

3. Dispositif selon l'une des revendications 1 ou 2, dans lequel le premier dispositif de levage (10) se compose de barres horizontales pouvant venir se placer sous un paquet partiel (3) se trouvant dans le niveau de transport (11) pour le soulever dans le premier niveau de stockage intermédiaire (12).

4. Dispositif selon l'une des revendications 1 à 3, dans lequel le second dispositif de levage (15) se compose de barres horizontales pouvant venir se placer sous un paquet partiel de complément (16) se trouvant dans le niveau de transport (11) pour le soulever dans le second niveau de stockage intermédiaire (17).

5. Dispositif selon l'une des revendications 1 à 4, dans lequel il est prévu un dispositif de commande et/ou de réglage qui reçoit des informations relatives aux paquets partiels (3) formés dans le poste de rassemblement (4) et qui calcule une configuration de couches pour le palettiseur (8) à l'aide des informations reçues.

6. Dispositif selon la revendication 5, dans lequel des ordres d'exécution relatifs à la formation des paquets partiels (3) et provenant du dispositif de commande et/ou de réglage sont transmis au poste de rassemblement (4).

7. Dispositif selon l'une des revendications 1 à 6, dans lequel il est prévu, entre le poste de rassemblement (4) et le palettiseur (8), une installation de canalisation (20) pour les paquets finis (1), avec laquelle installation de canalisation (20) il est possible de canaliser temporairement au moins un paquet fini (1) hors de la voie de transport (23) entre le poste de rassemblement (4) et le palettiseur (8) et, selon le besoin, de le recanaliser dans celle-ci
